# EUROPÄISCHE PATENTSCHRIFT

(11) **EP 3 132 970 B1**
(45) Veröffentlichungstag und Bekanntmachung des Hinweises auf die Patenterteilung: **18.09.2019**
(21) Anmeldenummer: 16169988.9
(22) Anmeldetag: 17.05.2016
(51) Int. Cl.: B60P 1/44

(54) **HUBLADEBÜHNE BEI EINEM KRAFTFAHRZEUG**
CANTILEVER LIFT IN A MOTOR VEHICLE
PLATE-FORME DE CHARGEMENT DE VEHICULE AUTOMOBILE

(30) Priorität: 19.08.2015 DE 102015215843
(43) Veröffentlichungstag der Anmeldung: 22.02.2017
(73) Patentinhaber: Bär Management- und Beteiligungsgesellschaft mbH, 74078 Heilbronn (DE)
(72) Erfinder: Bär, Tobias, 74078 Heilbronn (DE); Klink, Norman, 74243 Langenbrettach (DE)
(74) Vertreter: DREISS Patentanwälte PartG mbB

(56) Entgegenhaltungen:
- CA-A1- 2 769 303
- DE-A1-102008 028 434
- DE-A1-102013 222 299
- US-B2- 8 198 981

## Beschreibung

Die Erfindung betrifft eine Hubladebühne bei einem Kraftfahrzeug, mit einem durch Anschlusskomponenten an das Kraftfahrzeug montierbaren Hub- und Schwenkwerk, welches motorisch, insbesondere hydraulisch antreibbar ist, mit einer durch das Hub- und Schwenkwerk heb- und senkbaren Plattform, die in allen Hubstellungen in einer gewählten Lage haltbar ist, wobei die Plattform außerdem im auf Niveau eines Laderaums des Kraftfahrzeugs angehobenen Zustand von einer horizontalen Schwenkstellung in eine vertikale Schwenkstellung schwenkbar ist, in der sie den Laderaum des Kraftfahrzeugs verschließt oder hinter einer den Laderaum verschließenden Tür positioniert ist, und umgekehrt von der vertikalen Schwenkstellung in die horizontale Schwenkstellung schwenkbar ist, oder wobei die Plattform in eine Verstaustellung unterhalb des Laderaums des Kraftfahrzeugs bringbar ist und hierbei zueinander schwenkbare Plattformbereiche gegeneinander verschwenkt und gefaltet werden, und mit einem Antrieb für das Hub- und Schwenkwerk, wobei der Antrieb ein Hydraulikaggregat mit einem Elektromotor zum Antrieb einer Hydraulikpumpe des Hydraulikaggregats umfasst oder elektromotorisch ausgebildet ist, wobei das Heben und Senken und Verschwenken der Plattform oder von Plattformteilen mittels einer elektrischen oder elektronischen Steuereinrichtung gesteuert wird, wobei eine Fernbedienung zur Fernsteuerung der Steuereinrichtung auf Basis drahtloser und insbesondere digital codierter Kommunikation vorgesehen ist mit einem durch den Bediener mitführbaren Handbedienteil und mit einem der Steuereinrichtung zugeordneten Sende/Empfangsteil, wobei das Handbedienteil und das Sende/Empfangsteil Sende-/Empfangseinrichtungen umfassen, die ausgebildet sind, miteinander drahtlos zu kommunizieren.

Bis in die jüngere Vergangenheit wurden Hubladebühnen dadurch bedient, dass zunächst entweder vom Fahrerhaus aus oder mittels eines Schlüssels an einer Bedienkonsole am hinteren Ende des Fahrzeugs eine Versorgung der Steuereinrichtung der Hubladebühne mit Steuerspannung eingeschaltet wurde. Sodann konnten durch eine Bedienperson typischerweise mittels beidhändiger Bedienung von an der Bedienkonsole vorgesehenen Schwenkhebeln die verschiedenen Funktionen des Hub- und Schwenkwerks angesteuert und ausgeführt werden, also insbesondere das Verschwenken der Plattform zwischen der vertikalen und der horizontalen Schwenkstellung und das Heben und Senken der Plattform in ihrer horizontalen Schwenkstellung zwischen dem Niveau des Ladebodens des Aufbaus und des Erdbodens oder einer Zwischenposition.

Insbesondere durch die Anmelderin ist auch schon eine Hubladebühne der eingangs beschriebenen Art bekannt geworden, bei der eine Fernbedienung zur Fernsteuerung der elektrischen oder elektronischen Steuereinrichtung vorgesehen ist. Dabei wird nach Ausführung einer Kopplung des Handbedienteils mit dem der Steuereinrichtung zugeordneten Sende/Empfangsteil und nach Ausführung einer sogenannten Anmeldung des Handbedienteils an dem Sende/Empfangsteil die aktive Ansteuerung, das heißt die Verstellung des Hub- und Schwenkwerks mittels des Handbedienteils ermöglicht, sofern die Bedienperson und das Handbedienteil sich aus Sicherheitsgründen in der Nähe der Plattform und damit der Hubladebühne befindet. Die Fernbedienung ersetzte also lediglich die Schwenkhebelbedienung an der externen Bedienkonsole hinten am Fahrzeug. Auch DE 10 2008 028 434 A1 offenbart eine Hubladebühne der eingangs beschriebenen Art mit Fernbedienung, wobei ein Abfragemittel vorgesehen ist, mittels dessen das Vorliegen eines oder mehrerer Sicherheitskriterien abfragbar ist, und Stellsignale des Handbedienteils nur bei positivem Signal des Vorliegens eines oder mehrerer Sicherheitskriterien zur aktiven Verstellung des Hub- und Schwenkwerks zu den motorischen Antrieben durchgeschaltet werden. Das Vorliegen oder Nichtvorliegen der Sicherheitskriterien kann bei dem Handbedienteil zur Anzeige gebracht werden. Dabei geht es um die Frage, ob sich die Bedienperson und damit das Handbedienteil in einem als sicher und sinnvoll anzusehenden Abstand zu der Hubladebühne befindet oder ob die Hubladebühne einen hinreichenden Verschwenkraum in ihrer Umgebung zur Verfügung hat.

DE 10 2004 037 707 B4 offenbart und betrifft ein drahtloses Fernbedienungssystem für eine Niveauregulierung bei einem Nutzfahrzeug mit Handbedienteil und Sende/Empfangsteil mit jeweiligen Sende-/Empfangseinrichtungen, die ausgebildet sind, miteinander drahtlos zu kommunizieren.

DE 10 2013 222 299 A1 umfasst Sensoren, die immer wieder die momentane Hub- oder Schwenkstellung der Plattform erfassen, um den Vorgang des Verstellens der Plattform zu steuern. Gemäß DE 10 2013 012598 A1 werden über einen Neigungssensor der Schwenkwinkel der Plattform und über einen Beschleunigungssensor dynamische Werte beim Bewegen der Plattform ermittelt und für die Steuerung der Bewegung der Plattform verwendet, wobei erfasst wird, ob eine Senk- bzw. Hubbewegung der Plattform beendet, gestartet und/oder unterbrochen wird, oder erfasst wird, wann die Plattform vollständig abgesenkt und/oder vollständig angehoben ist. Auch gemäß DE 10 2006 062231 A1 wird eine jeweilige Schwenkstellung von einem Sensor erfasst und an eine Steuereinheit gegeben, wo sie zur Steuerung der Bewegung der Plattform verwendet wird, insbesondere um automatisch eine Null-Lage anzufahren. Gemäß DE 10 2006 048 162 A1 wird die Schwenkstellung einer Plattform überwacht um hierdurch eine unautorisierte Betätigung zu detektieren. CA 2 769 303 A1 und US 8,198,981 B2 offenbaren eine Hubladebühne mit den Merkmalen des Oberbegriffs des Anspruchs 1.

Der vorliegenden Erfindung liegt die Aufgabe zu Grunde, eine mit einer Fernbedienung ausgestattete Hubladebühne der eingangs genannten Art hinsichtlich ihrer praktischen Bedienbarkeit weiter zu verbessern.

Diese Aufgabe wird bei einer Hubladebühne nach dem Oberbegriff des Anspruchs 1 erfindungsgemäß dadurch gelöst, dass die Steuereinrichtung zur Meldung der Hub- und/oder Schwenkstellung der Plattform an das Handbedienteil mittels Kommunikation über die Fernbedienung ausgebildet ist und dass die Hub- und/oder Schwenkstellung der Plattform an dem Handbedienteil visuell und/oder akustisch anzeigbar oder durch Vibration vermittelbar ist und dass das Handbedienteil erst nach Erhalt der Meldung der Hub- und/oder Schwenkstellung der Plattform weiter bedienbar ist.

Erfindungsgemäß kann die aktuelle Hub- und/oder Schwenkstellung der Plattform zum einen erfasst und zum anderen an die Bedienperson über das von ihr mitgeführte Handbedienteil mitgeteilt werden. Es besteht also die Möglichkeit, dass der Fahrer oder eine sonstige Bedienperson innerhalb oder außerhalb des Fahrerhauses mittels der Fernbedienung unmittelbar Kenntnis über diese Hub- und/oder Schwenkstellung der Plattform erhält. Die Meldung der Hub- und/oder Schwenkstellung der Plattform kann dann für weitere Steuerungszwecke ausgehend von dem Handbedienteil verwendet werden. Die mit der Steuereinrichtung zusammenwirkende Einrichtung zur Erfassung der Hub- und/oder Schwenkstellung der Plattform und damit des Hub- und Schwenkwerks kann in vielfacher Weise ausgebildet sein. Es könnte wenigstens ein Lagesensor an der Plattform selbst oder an Tragarmen des Hub- und Schwenkwerks vorgesehen sein, oder es wäre denkbar, den Druck in hydraulischen Zylindern des Hub- und Schwenkwerks zur Bestimmung heranzuziehen.

Weiter ist bei der erfindungsgemäßen Hubladebühne vorgesehen, dass das Handbedienteil erst nach Erhalt der Meldung der Hub- und/oder Schwenkstellung der Plattform weiter bedienbar ist. Nach diesem weiteren Gedanken wird gewissermaßen als Voraussetzung für die weitere Bedienbarkeit mittels Fernbedienung der Erhalt der Meldung der Hub- und/oder Schwenkstellung der Plattform an dem Handbedienteil vorgesehen. Dies kann sich in sicherheitstechnischer Hinsicht aber auch zur Vereinfachung der weiteren korrekten Bedienung als vorteilhaft erweisen.

Des Weiteren kann es sich als vorteilhaft erweisen, wenn die Versorgung der elektrischen oder elektronischen Steuereinrichtung mit Steuerspannung und damit die Betriebsbereitschaft der Hubladebühne vom Fahrerhaus des Kraftfahrzeugs aus mittels Fernsteuerung durch das Handbedienteil einschaltbar und vorzugsweise auch ausschaltbar ist. Mit diesem weiteren Vorschlag wird von der seitherigen Praxis Abstand genommen, die Steuerspannung über eine Festverdrahtung oder Verkabelung vom Fahrerhaus aus oder -wie eingangs erwähnt- mittels eines Schlüssels an der externen Bedienkonsole ein- und auszuschalten. Dies eröffnet die Möglichkeit, auf die Festverdrahtung der Hubladebühne und deren Steuereinrichtung mit dem Fahrerhaus ganz oder teilweise zu verzichten.

In Weiterbildung dieses Erfindungsgedankens wird vorgeschlagen, dass die elektrische oder elektronische Steuereinrichtung zur Rückmeldung eines Einschaltzustands, also der Versorgung der Steuereinrichtung mit Steuerspannung und damit der Betriebsbereitschaft der Hubladebühne, an das Handbedienteil mittels Kommunikation über die Fernbedienung ausgebildet ist, und dass der Einschaltzustand an dem Handbedienteil visuell und/oder akustisch anzeigbar oder durch Vibration vermittelbar ist.

Diese Rückmeldung kann wiederum als weitere Voraussetzung für die weitere Fernbedienung der Hubladebühne eingesetzt werden, indem vorgesehen wird, dass das Handbedienteil erst nach Erhalt der Rückmeldung eines Einschaltzustands der elektrischen oder elektronischen Steuereinrichtung weiter bedienbar ist.

Der vorrausgehend erörterte Erhalt der Meldung der Hub- und/oder Schwenkstellung der Plattform sowie die Rückmeldung eines Einschaltzustands der elektronischen Steuereinrichtung können auch kumulativ als Voraussetzung zur weiteren Fernbedienbarkeit mittels des Handbedienteils verwendet werden.

Nach einem weiteren Gedanken von besonderer Bedeutung ist die erfindungsgemäße Hubladebühne weiter gekennzeichnet durch eine Prüfeinrichtung, die zur Feststellung ausgebildet ist, ob sich das Handbedienteil im Fahrerhaus befindet, und dadurch, dass das Handbedienteil und die Prüfeinrichtung derart zusammenwirken, dass die Versorgung der elektrischen oder elektronischen Steuereinrichtung mit Steuerspannung und damit die Betriebsbereitschaft der Hubladebühne vom Fahrerhaus des Kraftfahrzeugs aus mittels Fernsteuerung durch das Handbedienteil nur dann einschaltbar ist, wenn sich das Handbedienteil im Fahrerhaus befindet und dies durch die Prüfeinrichtung automatisch festgestellt ist. Hierdurch kann sichergestellt werden, dass die Versorgung der elektronischen Steuereinrichtung mit Steuerspannung nur durch autorisierte Bedienpersonen, nämlich durch diejenigen zu dem betreffenden Lastkraftfahrzeug gehörenden und das Handbedienteil zurecht mitführenden und besitzenden Personen vorgenommen werden kann.

In weiterer Ausbildung der Erfindung wird vorgeschlagen, dass im Fahrerhaus des Kraftfahrzeugs eine Aufnahmestation für das Handbedienteil vorgesehen ist, und dass die Aufnahmestation und das Handbedienteil derart zusammenwirken, dass eine Einschaltung der Versorgung der elektrischen oder elektronischen Steuereinrichtung mit Steuerspannung vom Fahrerhaus des Kraftfahrzeugs aus nur dann mittels Fernsteuerung durch das Handbedienteil ausführbar ist, wenn sich das Handbedienteil in der Aufnahmestation befindet. Auch diese Maßnahme erhöht die Betriebssicherheit und gestattet die Verwendung des Handbedienteils der Fernbedienung gewissermaßen auch als ortsfeste Einrichtung für die Einschaltung der Versorgung der Steuereinrichtung mit Steuerspannung.

Nach einer weiteren Ausführungsform ist die erfindungsgemäße Hubladebühne gekennzeichnet durch eine Prüfeinrichtung, die zur Feststellung ausgebildet ist, ob sich das Handbedienteil im Fahrerhaus befindet, und dass dadurch, das Handbedienteil und die Prüfeinrichtung derart zusammenwirken, dass das Handbedienteil und damit die Fernsteuerung vom Fahrerhaus des Kraftfahrzeugs aus nur dann zur aktiven Ansteuerung, d.h. zum Verstellen des Hub- und Schwenkwerks, mittels Fernsteuerung bedienbar ist, wenn sich das Handbedienteil im Fahrerhaus befindet und dies durch die Prüfeinrichtung automatisch festgestellt ist. Nach diesem weiteren Gedanken ist die eigentliche aktive Ansteuerung des Hub- und Schwenkwerks mittels Fernbedienung über das Handbedienteil vom Fahrerhaus aus nur möglich, wenn die zuvor erwähnte Prüfung und Feststellung ausgeführt wurde. Auch dies lässt sich für weitere sicherheitsrelevante Aspekte einsetzen.

Es kann sich auch als vorteilhaft erweisen, wenn im Fahrerhaus des Kraftfahrzeugs eine Aufnahmestation für das Handbedienteil vorgesehen ist und die Aufnahmestation und das Handbedienteil derart zusammenwirken, dass das Handbedienteil vom Fahrerhaus des Kraftfahrzeugs aus nur dann zur aktiven Ansteuerung, d.h. zum Verstellen des Hub- und Schwenkwerks, mittels Fernsteuerung bedienbar ist, wenn sich das Handbedienteil in der Aufnahmestation befindet. In diesem Fall ist die Fernbedienung mittels des Handbedienteils vom Fahrerhaus aus nur möglich, wenn sich das Handbedienteil in der Aufnahmestation befindet. Auch dies kann für weitere sicherheitsrelevante Aspekte vorteilhaft sein.

Nach einem weiteren Erfindungsgedanken wird vorgeschlagen, dass das Handbedienteil vom Fahrerhaus des Kraftfahrzeugs aus nur dann zur aktiven Ansteuerung, d.h. zum Verstellen des Hub- und Schwenkwerks, mittels Fernbedienung bedienbar ist, wenn eine Rückmeldung von einer Rückfahrkamera über drahtlose Kommunikation bei dem Handbedienteil oder über drahtgebundene Kommunikation über eine Aufnahmestation für das Handbedienteil bei dem Handbedienteil eingeht.. Diese Rückmeldung der Rückfahrkamera wird über die elektrische oder elektronische Steuereinrichtung und von dort über die Fernbedienung an das Handbedienteil übertragen. Auch dies dient der Betriebssicherheit. Erst wenn eine Rückfahrkamera Informationen an das Fahrerhaus sendet und dies über eine Rückmeldung bei dem Handbedienteil eingeht, ist eine aktive Ansteuerung unter Verwendung des Handbedienteils vom Fahrerhaus aus möglich. Die Bildinformation der Rückfahrkamera wird dabei weiter auf separatem Display im Fahrzeughaus angezeigt.

Nach einem weiteren Gedanken wird vorgeschlagen, dass eine mit dem Handbedienteil zusammenwirkende Einrichtung zur Nahbereichserkennung vorhanden ist, so dass eine Einschaltung der Versorgung der elektrischen oder elektronischen Steuereinrichtung mit Steuerspannung mittels Fernsteuerung durch das Handbedienteil von außerhalb des Fahrerhauses nur dann ausführbar ist, wenn sich das Handbedienteil innerhalb einer vorbestimmten Signalstärke oder Distanz zu einem Bezugspunkt in der Nähe des Hub- und Schwenkwerks befindet. Über diese Einrichtung zur Nahbereichserkennung wird erreicht, dass eine Einschaltung der Steuereinrichtung zur weiteren aktiven Bedienung des Hub- und/oder Schwenkwerks eben nur dann möglich ist, wenn sichergestellt ist, dass sich die Bedienperson in einem Nahbereich befindet der eine unmittelbare Einsicht auf den Einflussbereich der Hubladebühne und deren Komponenten gestattet.

In weiterer Ausbildung diese Gedankens wird vorgeschlagen, dass eine mit dem Handbedienteil zusammenwirkende Einrichtung zur Nahbereichserkennung vorhanden ist, so dass bestimmte Funktionen der Verstellung des Hub- und Schwenkwerks, insbesondere das Verschwenken der Plattform in die vertikale Stellung, mittels Fernsteuerung durch das Handbedienteil von außerhalb des Fahrerhauses nur dann ausführbar ist, wenn sich das Handbedienteil innerhalb einer vorbestimmten Signalstärke oder Distanz zu einem Bezugspunkt in der Nähe des Hub- und Schwenkwerks befindet.

Nach einem weiteren Erfindungsgedanken von an sich eigenständiger Bedeutung wird bei einer Hubladebühne, insbesondere nach dem Oberbegriff des Anspruchs 1, eine Prüfeinrichtung vorgesehen, die zur Feststellung ausgebildet ist, ob sich das Handbedienteil im Fahrerhaus befindet, und die mit einer Startunterbrechungseinrichtung für das Kraftfahrzeug zusammenwirkt derart, dass die Startunterbrechungseinrichtung automatisch erst dann deaktiviert wird, wenn das Handbedienteil sich im Fahrerhaus befindet und dies durch die Prüfeinrichtung automatisch festgestellt ist. Auf diese Weise wird bei Hubladebühnen mit Fernbedienung mittels eines Handbedienteils eine Verliersicherung für das Handbedienteils realisiert, indem das Kraftfahrzeug nur dann gestartet werden kann, wenn das Handbedienteil sich im Fahrerhaus befindet und auf diese Weise sicher mitgeführt und nicht versehentlich zurückgelassen wird.

Auch hier kann es sich in weiterer Ausbildung der Erfindung als vorteilhaft erweisen, wenn im Fahrerhaus des Kraftfahrzeugs eine Aufnahmestation für das Handbedienteil vorgesehen ist und dass die Prüfeinrichtung in die Aufnahmestation integriert ist, so dass die Startunterbrechungseinrichtung automatisch erst dann deaktiviert wird, wenn das Handbedienteil sich in der Aufnahmestation befindet.

Die Erfindung betrifft auch ein Verfahren zum Betreiben einer Hubladebühne mit den Merkmalen des Anspruchs 12 oder 13. Es wird ferner Schutz in Anspruch genommen für sämtliche Verfahrensmaßnahmen, die sich aus den vorausgehend erörterten vorrichtungsmäßig formulierten Ansprüchen ergeben.

Weitere Einzelheiten, Merkmale und Vorteile der Erfindung ergeben sich aus den beigefügten Patentansprüchen und aus der zeichnerischen Darstellung und der nachfolgenden Beschreibung einer vorteilhaften Ausführungsform der erfindungsgemäßen Hubladebühne. In der Zeichnung zeigt:
Figur 1 eine schematische Darstellung einer Hubladebühne;
Figur 2 eine schematische Darstellung einer Steuereinrichtung und Fernbedienung bei einer erfindungsgemäßen Hubladebühne; und
Figur 3 eine schematische Darstellung eines Kraftfahrzeugs mit erfindungsgemäßer Hubladebühne.

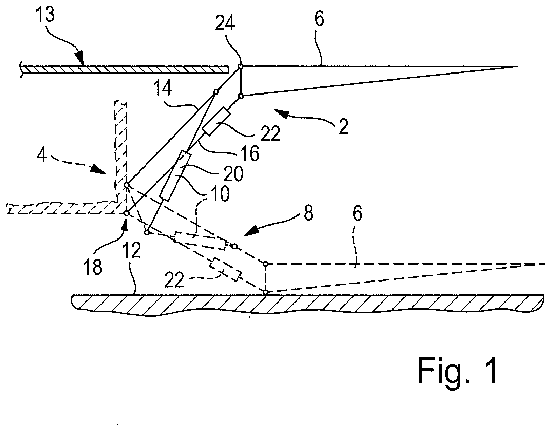

Figur 1 zeigt eine Hubladebühne 2, die an einem Heckbereich 4 eines Kraftfahrzeugs, beispielsweise eines Lastkraftfahrzeugs, angebaut ist. Eine Plattform 6 der Hubladebühne 2 ist von einem im bevorzugt dargestellten Fall parallelogrammförmig ausgebildeten Hub- und Schwenkwerk 8 so gehalten, dass sie mittels wenigstens eines Hubzylinders 10 heb- und senkbar ist und dabei ihre im wesentlichen horizontale Lage beibehält. Das in Figur 1 nur schematisch dargestellte Hub- und Schwenkwerk 8 ist beidseits links und rechts des Kraftfahrzeugs vorgesehen, wobei nicht zwingend auf jeder Seite die noch zu erläuternden Zylinder 10 vorgesehen werden müssen.

In Figur 1 ist die Plattform 6 mitsamt dem Hub- und Schwenkwerk 6 mit durchgezogenen Linien in einer gegenüber einer Grundfläche 12, auf der das Kraftfahrzeug abgestellt ist, angehobenen Lage dargestellt. Auch die Ladeebene 13 des Fahrzeugaufbaus ist dargestellt. Die gestrichelte Darstellung zeigt die auf die Grundfläche 12 abgesenkte Plattform 6 und die entsprechende Lage des Hub- und Schwenkwerks 8.

Das Hub- und Schwenkwerk 8 umfasst beidseits je einen oberen Tragarm 14, der die obere Strebe eines Parallelogramms bildet, und einen unteren Arm 16, der die untere Strebe des Parallelogramms bildet. Der obere Tragarm 14 und der untere Arm 16 sind über nicht im einzelnen dargestellte Anschlusskomponenten 18 schwenkbar am Kraftfahrzeug angeordnet. Diese Anschlusskomponenten 18 umfassen beispielsweise einen Querträger, an dem sämtliche Komponenten des Hub- und Schwenkwerks 8 gehalten sind und der insgesamt beispielsweise an Längsträgern des Kraftfahrzeugs montierbar ist. Die Tragarme 14, 16 sind an ihrem kraftfahrzeugabgewandten Ende jeweils gelenkig mit der Plattform 6 verbunden. Gegen den oberen Tragarme 14 stützt sich der Hubzylinder 20 ab; er stützt sich fahrzeugseitig gelenkig gegen die Anschlusskomponenten 18 der Hubladebühne ab. In dem unteren Tragarm 16 des Hub- und Schwenkwerks 8 ist ein Neige- oder Parallelzylinder 22 vorgesehen, mittels dessen die Länge des unteren Tragarms 16 verstellbar ist. Hierdurch lässt sich die Plattform 6 um eine horizontale Achse 24 nach oben oder unten neigen und weiter in ihre vertikale Stellung, die sogenannte Fahrstellung, schwenken, in der sie den Aufbau des Kraftfahrzeugs verschließt, wenn keine zusätzlichen Türen vorgesehen sind.

Durch das im beispielhaft dargestellten Fall parallelogrammförmig ausgebildete Hub- und Schwenkwerk 8 behält die Plattform 6 beim Heben und Senken ihre im wesentlichen horizontale Lage bei.

Die Erfindung kann jedoch auch in Verbindung mit anderen Arten von Hubladebühnen, beispielsweise in Verbindung mit einem Vertikallift oder einer Hubladebühne mit einem elektromagnetisch betätigten Hub- und Schwenkwerk, angewendet werden.

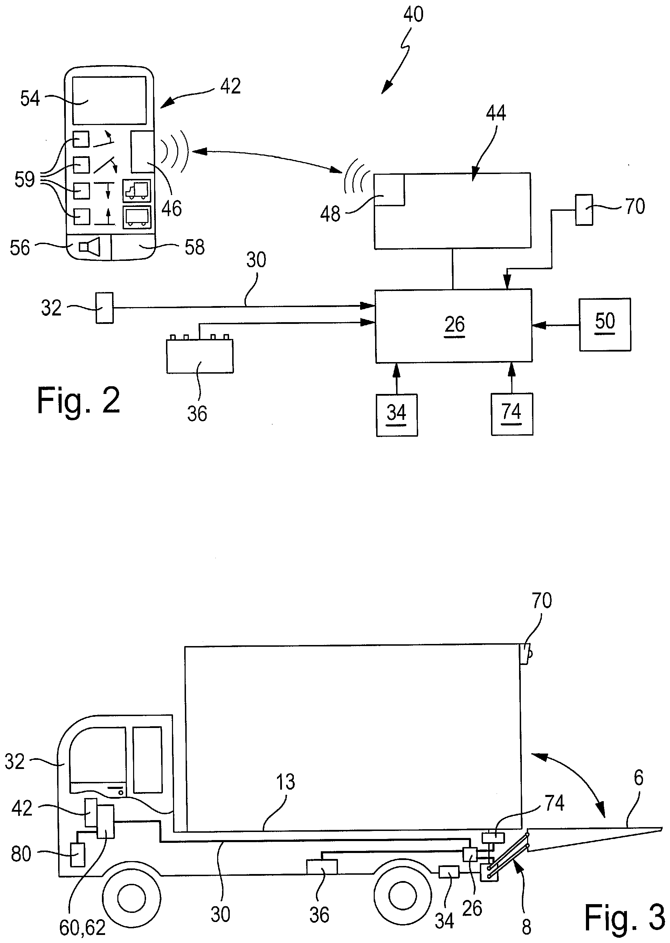

Die Hubladebühne weist eine in Figuren 2 und 3 dargestellte elektrische oder elektronische Steuereinrichtung 26 auf, mittels derer die Komponenten des Hub- und Schwenkwerks 8 angesteuert und verstellt werden.

Wie in Figuren 2 und 3 schematisch dargestellt ist die Steuereinrichtung 26 bei vorbekannten Hubladebühnen typischerweise über eine Festverdrahtung oder Verkabelung 30 mit dem Fahrerhaus 32 des Kraftfahrzeugs verbunden. Über diese Festverdrahtung oder Verkabelung 30 wird bei vorbekannten Hubladebühnen eine Versorgung der Steuereinrichtung 26 mit Steuerspannung und damit die Betriebsbereitschaft der Hubladebühne vom Fahrerhaus 32 des Kraftfahrzeugs aus eingeschaltet und auch wieder ausgeschaltet. Alternativ kann dies mittels einer Schlüsselschaltung ausgehend von einer externen Bedienkonsole 34 in der Nähe der Hubladebühne 2 erfolgen. Hierdurch wird also die Steuereinrichtung 26 und damit auch die Antriebskomponenten für das Hub- und Schwenkwerk 8 mit Steuerspannung aus einer Spannungsquelle 36 des Kraftfahrzeugs versorgt beziehungsweise wieder von der Spannungsquelle 36 getrennt.

Bei der hier in Rede stehenden erfindungsgemäßen Hubladebühne ist eine insgesamt mit dem Bezugszeichen 40 bezeichnete Fernsteuerung oder Fernsteuerungseinrichtung vorgesehen, die ein durch den Bediener mitführbares Handbedienteil 42 und ein der Steuereinrichtung 26 zugeordnetes Sende/Empfangsteil 44 umfasst, die jeweils eine Sende-/Empfangseinrichtung 46, 48 aufweisen, welche auf Basis drahtloser und vorzugsweise digital codierter Kommunikation, also insbesondere funkbasiert arbeiten, wobei wenigstens grundsätzlich auch eine Infrarotkommunikation denkbar wäre.

Die Hubladebühne 2 umfasst ferner eine Einrichtung 50 zur Erfassung der Hub- und/oder Schwenkstellung der Plattform 6 der Hubladebühne, wobei diese Einrichtung 50 in an sich beliebiger Weise mittels an sich beliebiger Sensoren ausgebildet sein kann, solange sie die erfassten Informationen zur Hub- und/oder Schwenkstellung der Plattform 6 und damit des Hub- und Schwenkwerks 8 an die Steuereinrichtung 26 in weiterverarbeitbarer oder auswertbarer Form weiterzugeben vermag. Die Steuereinrichtung 26 ist zur Meldung der Hub- und/oder Schwenkstellung der Plattform 6 an das Handbedienteil 42 mittels drahtloser Kommunikation über die Fernbedienung 40 ausgebildet.

Hierfür bedarf es insbesondere einer Kopplung des Handbedienteils 42 mit dem Sende/Empfangsteil 44, derart, dass das Handbedienteil bei dem Sende/Empfangsteil 44 als authorisiertes Bediengerät individualisiert ist. Sodann bedarf es der Anmeldung des Handbedienteils 42 bei dem Sende/Empfangsteil 44 zum Zwecke der Ausführung der Kommunikation. Nach Anmeldung des Handbedienteils 42 an dem Sende/Empfangsteil 44, und zwar entweder unmittelbar hieran anschließend oder erst wenn ausgehend von dem Handbedienteil 42 eine aktive Ansteuerung zum Verstellen des Hub- und Schwenkwerks 8 vorgenommen werden soll, wird über die Steuereinrichtung 26 und das Sende/Empfangsteil 44 die momentane Hub- und/oder Schwenkstellung der Plattform 6 an das Handbedienteil 42 mittels drahtloser Kommunikation gesandt. Das Handbedienteil 42 beziehungsweise dessen Sende-/Empfangseinrichtung 46 empfängt diese drahtlose Information und bringt die Hub- und/oder Schwenkstellung auf dem Handbedienteil 42 zur Anzeige. Dies kann visuell über ein Display 54 oder akustisch über einen Lautsprecher 56 und/oder durch Vibration mittels einer Vibrationseinrichtung 58 erfolgen. Im Anschluss an diese Übermittlung der Hub- und/oder Schwenkstellung und deren Anzeige durch das Handbedienteil 42 lässt sich durch Betätigung von Steuertasten 59 mittels der Fernsteuerung 40 das Hub- und Schwenkwerk 8 der Hubladebühne 2 verstellen.

Eine andere oder weitere Verstellung der Hub- und/oder Schwenkstellung der Plattform 6 über die Fernbedienung 40 ist beispielsweise erst nach Erhalt einer weiteren Meldung der aktuellen Hub- und/oder Schwenkstellung der Plattform 6 bei dem Handbedienteil 42 und vorzugsweise erst nachdem diese neue Hub- und/oder Schwenkstellung durch das Handbedienteil 42 zur Anzeige beziehungsweise zur Vermittlung an den Bediener gebracht wurde, möglich.

Des Weiteren ist in vorteilhafter Weise vorgesehen, dass die Steuereinrichtung 26 zur Rückmeldung eines Einschaltzustands, also der Versorgung der Steuereinrichtung 26 mit Steuerspannung aus der Spannungsquelle 36, an das Handbedienteil 42 ausgebildet ist. Dieser Einschaltzustand wird dann an dem Handbedienteil 42 wiederrum visuell über das Display 54 oder akustisch oder durch Vibration zur Anzeige gebracht. Erst nach Erhalt dieser Rückmeldung des Einschaltzustands an das Handbedienteil 42 ist das Handbedienteil 42 zur Fernsteuerung der Steuereinrichtung 26 nutzbar.

Wie in Figur 3 angedeutet ist weiter eine Prüfeinrichtung 60 vorhanden, die zur Feststellung ausgebildet ist, ob sich das Handbedienteil 42 im Fahrerhaus 32 des Kraftfahrzeugs befindet. Diese Prüfeinrichtung 60 kann beispielsweise durch eine Aufnahmestation 62 für das Handbedienteil 42 ausgebildet sein, in welche das Handbedienteil 42 beispielsweise ähnlich wie ein Mobiltelefon in eine Ladestation, einsetzbar ist. Die Prüfeinrichtung 60 und Handbedienteil 42 wirken derart zusammen, dass mittels des Handbedienteils 42 auf Basis drahtloser Kommunikation mit dem Sendeempfangsteil 44 die Einschaltung der Versorgung der Steuereinrichtung 26 mit Steuerspannung und damit die Betriebsbereitschaft der Hubladebühne vom Fahrerhaus 32 des Kraftfahrzeugs aus mittels Fernsteuerung durch das Handbedienteil 42 nur dann ausführbar ist, wenn sich das Handbedienteil 42 im Fahrerhaus 32 befindet und dies durch die Prüfeinrichtung 60 automatisch festgestellt ist. Die Prüfeinrichtung 60 und das Handbedienteil 42 wirken also im Sinne einer Betriebsfreigabe für die Fernbedienung 40 zusammen.

Die soeben erwähnte Einschaltung der Versorgung der Steuereinrichtung 26 mit Steuerspannung und damit die Betriebsbereitschaft der Hubladebühne ist zu unterscheiden von einer Fernsteuerung der Steuereinrichtung 26 zur aktiven Ansteuerung, das heißt zum Verstellen des Hub- und Schwenkwerks 8. Nach einem weiteren Erfindungsgedanken ist diese aktive Ansteuerung, das heißt die Verstellung des Hub- und Schwenkwerks 8, mittels Fernsteuerung durch das Handbedienteil 42 vom Fahrerhaus des Kraftfahrzeugs aus nur dann möglich, wenn die Anwesenheit des Handbedienteils 42 durch die Prüfeinrichtung 60 im Fahrerhaus 32 festgestellt ist. Insbesondere ist dies nur dann möglich, wenn sich das Handbedienteil 42 in der Aufnahmestation 62 befindet.

Aus Figur 3 ist eine weitere vorteilhafte Ausführungsform ersichtlich wonach der Hubladebühne eine Rückfahrkamera 70 zugeordnet ist, welche mit der Steuereinrichtung 26 derart zusammenwirkt, dass ein aktivierter Betriebszustand der Rückfahrkamera 70 an die Steuereinrichtung 26 übermittelt wird, insbesondere nur als digitales Signal "ein/aus". Von der Steuereinrichtung 26 wird dieser aktivierter Betriebszustand über die Fernbedienung 40 an das Handbedienteil 42 übermittelt und dort dahingehend verarbeitet, dass eine Fernsteuerung mittels des Handbedienteils 42 vom Fahrerhaus 32 des Kraftfahrzeugs aus nur dann möglich ist, wenn der aktivierte Betriebszustand der Rückfahrkamera 70 an das Handbedienteil 42 weitergeleitet wurde. Das eigentliche Bildsignal der Rückfahrkamera 70 wird typischerweise über andere Signalverbindungen an einem Kameradisplay im Fahrerhaus 32 visuell wahrnehmbar zur Anzeige gebracht.

Wenn das Handbedienteil 42 außerhalb des Fahrerhauses 32 zur Fernsteuerung der Steuereinrichtung 26 eingesetzt werden soll, so kommt eine Einrichtung 74 zur Nahbereichserkennung zum Einsatz, die in Figur 2 und 3 schematisch angedeutet ist. Mittels dieser Einrichtung 74 ist feststellbar, ob sich das Handbedienteil 42 innerhalb einer vorbestimmten Distanz zu dem Hub- und Schwenkwerk 8 oder innerhalb einer vorbestimmten Signalstärke zwischen den Sende-/Empfangseinrichtungen 46, 48 befindet. Nur wenn dies der Fall ist kann mittels des Handbedienteils 42 die Versorgung der Steuereinrichtung 26 mit Steuerspannung und die Fernsteuerung der Steuereinrichtung 26 zum Zwecke der Verstellung des Hub- und Schwenkwerks 8 mittels des Handbedienteils 42 von außerhalb des Fahrerhauses 32 ausgeführt werden.

Weiterhin erweist es sich als vorteilhaft, wenn die eingangs erwähnte Prüfeinrichtung 60 mit einer Startunterbrechungseinrichtung 80 des Kraftfahrzeugs zusammenwirkt derart, dass die Startunterbrechungseinrichtung 80 automatisch erst dann deaktiviert wird, wenn das Handbedienteil 42 sich im Fahrerhaus 32 befindet, also mitgeführt wird, und dies von der Prüfeinrichtung 60 automatisch festgestellt wurde. Auf diese Weise wird eine Verliersicherung für das Handbedienteil 42 realisiert.

## Patentansprüche

1. Hubladebühne (2) bei einem Kraftfahrzeug, mit einem durch Anschlusskomponenten (18) an das Kraftfahrzeug montierbaren Hub- und Schwenkwerk (8), welches motorisch, insbesondere hydraulisch antreibbar ist, mit einer durch das Hub- und Schwenkwerk (8) heb- und senkbaren Plattform (6), die in allen Hubstellungen in einer gewählten Lage haltbar ist, wobei die Plattform (6) außerdem im auf Niveau eines Laderaums des Kraftfahrzeugs angehobenen Zustand von einer horizontalen Schwenkstellung in eine vertikale Schwenkstellung schwenkbar ist, in der sie den Laderaum des Kraftfahrzeugs verschließt oder hinter einer den Laderaum verschließenden Tür positioniert ist, und umgekehrt von der vertikalen Schwenkstellung in die horizontale Schwenkstellung schwenkbar ist, oder wobei die Plattform (6) in eine Verstaustellung unterhalb des Laderaums des Kraftfahrzeugs bringbar ist und hierbei zueinander schwenkbare Plattformbereiche gegeneinander verschwenkt und gefaltet werden, und mit einem Antrieb für das Hub- und Schwenkwerk (8), wobei das Heben und Senken und Verschwenken der Plattform (6) oder von Plattformteilen mittels einer elektrischen oder elektronischen Steuereinrichtung (26) gesteuert wird, wobei eine Fernbedienung (40) zur Fernsteuerung der Steuereinrichtung (26) auf Basis drahtloser und insbesondere digital codierter Kommunikation vorgesehen ist mit einem durch den Bediener mitführbaren Handbedienteil (42) und mit einem der Steuereinrichtung (26) zugeordneten Sende/Empfangsteil (44), wobei das Handbedienteil (42) und das Sende/Empfangsteil (44) Sende-/Empfangseinrichtungen (46, 48) umfassen, die ausgebildet sind, miteinander drahtlos zu kommunizieren, wobei eine mit der Steuereinrichtung (26) zusammenwirkende Einrichtung (50) zur Erfassung der Hub- und/oder Schwenkstellung der Plattform (6) vorgesehen ist, **dadurch gekennzeichnet, dass** die Steuereinrichtung (26) zur Meldung der Hub- und/oder Schwenkstellung der Plattform (6) an das Handbedienteil (42) mittels Kommunikation über die Fernbedienung (40) ausgebildet ist und dass die Hub- und/oder Schwenkstellung der Plattform (6) an dem Handbedienteil (42) visuell und/oder akustisch anzeigbar oder durch Vibration vermittelbar ist, und dass das Handbedienteil (42) erst nach Erhalt der Meldung der Hub- und/oder Schwenkstellung der Plattform (6) weiter bedienbar ist.

2. Hubladebühne nach Anspruch 1, **dadurch gekennzeichnet, dass** die Versorgung der elektrischen oder elektronischen Steuereinrichtung (26) mit Steuerspannung und damit die Betriebsbereitschaft der Hubladebühne vom Fahrerhaus (32) des Kraftfahrzeugs aus mittels Fernsteuerung durch das Handbedienteil (42) einschaltbar und vorzugsweise auch ausschaltbar ist.

3. Hubladebühne nach Anspruch 1 oder 2, **dadurch gekennzeichnet, dass** die elektrische oder elektronische Steuereinrichtung (26) zur Rückmeldung eines Einschaltzustands, also der Versorgung der Steuereinrichtung (26) mit Steuerspannung und damit der Betriebsbereitschaft der Hubladebühne (2), an das Handbedienteil (42) mittels Kommunikation über die Fernbedienung (40) ausgebildet ist, und dass der Einschaltzustand an dem Handbedienteil (42) visuell und/oder akustisch anzeigbar oder durch Vibration vermittelbar ist.

4. Hubladebühne nach Anspruch 3, **dadurch gekennzeichnet, dass** das Handbedienteil (42) erst nach Erhalt der Rückmeldung eines Einschaltzustands der elektrischen oder elektronischen Steuereinrichtung (26) weiter bedienbar ist.

5. Hubladebühne nach einem oder mehreren der vorstehenden Ansprüche, **gekennzeichnet durch** eine Prüfeinrichtung (60), die zur Feststellung ausgebildet ist, ob sich das Handbedienteil (42) im Fahrerhaus (32) befindet, und **dadurch, dass** das Handbedienteil (42) und die Prüfeinrichtung (60) derart zusammenwirken, dass die Versorgung der elektrischen oder elektronischen Steuereinrichtung (26) mit Steuerspannung und damit die Betriebsbereitschaft der Hubladebühne (2) vom Fahrerhaus (32) des Kraftfahrzeugs aus mittels Fernsteuerung durch das Handbedienteil (40) nur dann einschaltbar ist, wenn sich das Handbedienteil (42) im Fahrerhaus befindet und dies durch die Prüfeinrichtung (60) automatisch festgestellt ist.

6. Hubladebühne nach einem oder mehreren der vorstehenden Ansprüche, **dadurch gekennzeichnet, dass** im Fahrerhaus (32) des Kraftfahrzeugs eine Aufnahmestation (62) für das Handbedienteil (42) vorgesehen ist, und dass die Aufnahmestation (62) und das Handbedienteil (42) derart zusammenwirken, dass eine Einschaltung der Versorgung der elektrischen oder elektronischen Steuereinrichtung (26) mit Steuerspannung vom Fahrerhaus (32) des Kraftfahrzeugs aus nur dann mittels Fernsteuerung durch das Handbedienteil (42) ausführbar ist, wenn sich das Handbedienteil (42) in der Aufnahmestation (62) befindet.

7. Hubladebühne nach einem oder mehreren der vorstehenden Ansprüche, **gekennzeichnet durch** eine Prüfeinrichtung (60), die zur Feststellung ausgebildet ist, ob sich das Handbedienteil (42) im Fahrerhaus (32) befindet, und **dadurch, dass** das Handbedienteil (42) und die Prüfeinrichtung (60) derart zusammenwirken, dass das Handbedienteil (42) vom Fahrerhaus (32) des Kraftfahrzeugs aus nur dann zur aktiven Ansteuerung, d.h. zum Verstellen des Hub- und Schwenkwerks (8), mittels Fernsteuerung bedienbar ist, wenn sich das Handbedienteil (42) im Fahrerhaus (32) befindet und dies durch die Prüfeinrichtung (60) automatisch festgestellt ist.

8. Hubladebühne nach einem oder mehreren der vorstehenden Ansprüche, **dadurch gekennzeichnet, dass** im Fahrerhaus (32) des Kraftfahrzeugs eine Aufnahmestation (62) für das Handbedienteil (42) vorgesehen ist und dass die Aufnahmestation (42) und das Handbedienteil derart zusammenwirken, dass das Handbedienteil (42) vom Fahrerhaus (32) des Kraftfahrzeugs aus nur dann zur aktiven Ansteuerung, d.h. zum Verstellen des Hub- und Schwenkwerks (8), mittels Fernsteuerung bedienbar ist, wenn sich das Handbedienteil (42) in der Aufnahmestation (62) befindet.

9. Hubladebühne nach einem oder mehreren der vorstehenden Ansprüche, **dadurch gekennzeichnet, dass** das Handbedienteil (42) vom Fahrerhaus (32) des Kraftfahrzeugs aus nur dann zur aktiven Ansteuerung, d.h. zum Verstellen des Hub- und Schwenkwerks (8), mittels Fernbedienung bedienbar ist, wenn eine Rückmeldung von einer Rückfahrkamera (70) über drahtlose Kommunikation bei dem Handbedienteil (42) oder über drahtgebundene Kommunikation über eine Aufnahmestation (62) für das Handbedienteil (42) bei dem Handbedienteil (42) eingeht.

10. Hubladebühne nach einem oder mehreren der vorstehenden Ansprüche, **dadurch gekennzeichnet, dass** eine mit dem Handbedienteil (42) zusammenwirkende Einrichtung (74) zur Nahbereichserkennung vorhanden ist, so dass eine Einschaltung der Versorgung der elektrischen oder elektronischen Steuereinrichtung (26) mit Steuerspannung oder bestimmte Funktionen der Verstellung des Hub- und Schwenkwerks (8), insbesondere das Verschwenken der Plattform (6) in die vertikale Stellung, mittels Fernsteuerung durch das Handbedienteil (42) von außerhalb des Fahrerhauses (32) nur dann ausführbar ist, wenn sich das Handbedienteil (42) innerhalb einer vorbestimmten Signalstärke oder Distanz zu einem Bezugspunkt in der Nähe des Hub- und Schwenkwerks (8) befindet.

11. Hubladebühne nach einem oder mehreren der vorstehenden Ansprüche, **gekennzeichnet durch** eine Prüfeinrichtung (60), die zur Feststellung ausgebildet ist, ob sich das Handbedienteil (42) im Fahrerhaus (32) befindet, und die mit einer Startunterbrechungseinrichtung (80) für das Kraftfahrzeug zusammenwirkt derart, dass die Startunterbrechungseinrichtung (80) automatisch erst dann deaktivierbar ist oder deaktiviert wird, wenn das Handbedienteil (42) sich im Fahrerhaus (32) befindet und dies durch die Prüfeinrichtung (60) automatisch festgestellt ist.

12. Hubladebühne nach Anspruch 11, **dadurch gekennzeichnet, dass** im Fahrerhaus des Kraftfahrzeugs eine Aufnahmestation (62) für das Handbedienteil (42) vorgesehen ist und dass die Prüfeinrichtung (60) in die Aufnahmestation (62) integriert ist, so dass die Startunterbrechungseinrichtung (80) automatisch erst dann deaktivierbar ist oder deaktiviert wird, wenn das Handbedienteil (42) sich in der Aufnahmestation (62) befindet.

13. Verfahren zum Betreiben einer Hubladebühne (2) mit den Merkmalen eines oder mehrerer der vorstehenden Ansprüche, bei einem Kraftfahrzeug, wobei mittels einer mit der Steuereinrichtung (26) zusammenwirkenden Einrichtung (50) eine Hub- und/oder Schwenkstellung der Plattform (6) erfasst wird, **dadurch gekennzeichnet, dass** mittels der Steuereinrichtung (26) die Hub- und/oder Schwenkstellung der Plattform (6) an das Handbedienteil (42) mittels Kommunikation über die Fernbedienung (40) übermittelt wird und dass zuerst die Hub- und/oder Schwenkstellung der Plattform (6) an dem Handbedienteil (42) visuell und/oder akustisch angezeigt oder durch Vibration vermittelt wird und erst dann mittels Fernsteuerung durch das Handbedienteil (42) eine aktive Ansteuerung, d.h. ein Verstellen des Hub- und Schwenkwerks (8), ausgeführt wird.

## Claims

1. Tail lift (2) for a motor vehicle, comprising a lifting and pivoting mechanism (8) which can be mounted on the motor vehicle by means of connection components (18), which lifting and pivoting mechanism can be motor driven, in particular hydraulically driven, and has a platform (6) which can be lifted and lowered by the lifting and pivoting mechanism (8) and can be held in a selected situation in all lift positions, it also being possible, when lifted to the level of a cargo space of the motor vehicle, for the platform (6) to be pivoted from a horizontal pivot position to a vertical pivot position in which said platform closes the cargo space of the motor vehicle or is positioned behind a door that closes the cargo space, and vice versa from the vertical pivot position into the horizontal pivot position, or it being possible for the platform (6) to be brought into a stowage position underneath the cargo space of the motor vehicle and, here, mutually pivotable platform regions being pivoted towards one another and folded, and comprising a drive for the lifting and pivoting mechanism (8), the lifting and lowering and pivoting of the platform (6) or of platform parts being controlled by means of an electrical or electronic control device (26), a remote control (40) being provided for remotely controlling the control device (26) on the basis of wireless and in particular digitally coded communication, comprising a manual operating device (42), which can be carried by the operator, and a transmitting/receiving part (44) associated with the control device (26), the manual operating device (42) and the transmitting/receiving part (44) comprising transmitting/receiving devices (46, 48) which are designed to communicate with one another wirelessly, a device (50) that interacts with the control device (26) being provided for detecting the lift and/or pivot position of the platform (6), **characterized in that** the control device (26) is designed to signal the lift and/or pivot position of the platform (6) to the manual operating device (42) by means of communication via the remote control (40), and **in that** the lift and/or pivot position of the platform (6) can be displayed visually on and/or acoustically at the manual operating device (42) or can be conveyed by vibration, and **in that** the manual operating device (42) can be operated again only after receiving the signal regarding the lift and/or pivot position of the platform (6).

2. Tail lift according to claim 1, **characterized in that** the supply of control voltage to the electrical or electronic control device (26), and thus the operational readiness of the tail lift, can be switched on, and preferably also switched off, from the cab (32) of the motor vehicle by means of remote control using the manual operating device (42) .

3. Tail lift according to claim 1 or 2, **characterized in that** the electrical or electronic control device (26) is designed so as to feed a switched-on state, i.e. the supply of control voltage to the control device (26) and thus the operational readiness of the tail lift (2), back to the manual operating device (42) by means of communication via the remote control (40), and **in that** the switched-on state can be displayed visually on and/or acoustically at the manual operating device (42) or can be conveyed by vibration.

4. Tail lift according to claim 3, **characterized in that** the manual operating device (42) can be operated again only after feedback regarding a switched-on state of the electrical or electronic control device (26) has been received.

5. Tail lift according to one or more of the preceding claims, **characterized by** a test device (60) which is designed to determine whether the manual operating device (42) is located in the cab (32), and in such a way that the manual operating device (42) and the test device (60) interact such that the supply of control voltage to the electrical or electronic control device (26), and thus the operational readiness of the tail lift (2), can be switched on from the cab (32) of the motor vehicle by means of remote control using the manual operating device (40) only when the manual operating device (42) is located in the cab and this is determined automatically by the test device (60).

6. Tail lift according to one or more of the preceding claims, **characterized in that** a receiving station (62) for the manual operating device (42) is provided in the cab (32) of the motor vehicle, and **in that** the receiving station (62) and the manual operating device (42) interact such that the supply of control voltage to the electrical or electronic control device (26) can be switched on from the cab (32) of the motor vehicle by remote control using the manual operating device (42) only when the manual operating device (42) is located in the receiving station (62).

7. Tail lift according to one or more of the preceding claims, **characterized by** a test device (60) which is designed to determine whether the manual operating device (42) is located in the cab (32), and in such a way that the manual operating device (42) and the test device (60) interact such that the manual operating device (42) can be operated by remote control from the cab (32) of the motor vehicle for active control, i.e. for adjusting the lifting and pivoting mechanism (8), only when the manual operating device (42) is located in the cab (32) and this is determined automatically by the test device (60).

8. Tail lift according to one or more of the preceding claims, **characterized in that** a receiving station (62) for the manual operating device (42) is provided in the cab (32) of the motor vehicle, and **in that** the receiving station (42) and the manual operating device interact such that the manual operating device (42) can be operated by remote control from the cab (32) of the motor vehicle for active control, i.e. for adjusting the lifting and pivoting mechanism (8), only when the manual operating device (42) is located in the receiving station (62) .

9. Tail lift according to one or more of the preceding claims, **characterized in that** the manual operating device (42) can be operated from the cab (32) of the motor vehicle by remote control for active control, i.e. for adjusting the lifting and pivoting mechanism (8), only when feedback from a rear view camera (70) is received at the manual operating device (42) by means of wireless communication or by means of wired communication via a receiving station (62) for the manual operating device (42) at the manual operating device (42).

10. Tail lift according to one or more of the preceding claims, **characterized in that** a device (74) that interacts with the manual operating device (42) is provided for proximity detection, and therefore switching on the supply of control voltage to the electrical or electronic control device (26) or certain functions of the adjustment of the lifting and pivoting mechanism (8), in particular the pivoting of the platform (6) into the vertical position, by remote control using the manual operating device (42) from outside the cab (32), can be carried out only when the manual operating device (42) is located within a predetermined signal strength or distance from a reference point near the lifting and pivoting mechanism (8).

11. Tail lift according to one or more of the preceding claims, **characterized by** a test device (60), which is designed to determine whether the manual operating device (42) is located in the cab (32) and which interacts with a start-up interruption device (80) for the motor vehicle such that the start-up interruption device (80) can be or is automatically deactivated only when the manual operating device (42) is located in the cab (32) and this is determined automatically by the test device (60).

12. Tail lift according to claim 11, **characterized in that** a receiving station (62) for the manual operating device (42) is provided in the cab of the motor vehicle and **in that** the test device (60) is integrated into the receiving station (62), and therefore the start-up interruption device (80) can be or is automatically deactivated only when the manual operating device (42) is located in the receiving station (62).

13. Method for operating a tail lift (2) having the features of one or more of the preceding claims, in a motor vehicle, a lift and/or pivot position of the platform (6) being detected by means of a device (50) that interacts with the control device (26), **characterized in that** the lift and/or pivot position of the platform (6) is transmitted by means of the control device (26) to the manual operating device (42) by means of communication via the remote control (40) and **in that** firstly the lift and/or pivot position of the platform (6) is displayed visually on and/or acoustically at the manual operating device (42) or is conveyed by vibration, and an active control, i.e. an adjustment of the lifting and pivoting mechanism (8), is carried out only by remote control using the manual operating device (42).

## Revendications

1. Hayon de chargement (2) destiné à un véhicule automobile, comprenant un mécanisme de levage et de pivotement (8) pouvant être monté au niveau du véhicule automobile grâce à des composants de raccordement (18) et pouvant être entraîné par un moteur, en particulier de manière hydraulique, comprenant une plate-forme (6) pouvant être levée et abaissée grâce au mécanisme de levage et de pivotement (8) et pouvant être maintenue dans un état sélectionné dans toutes les positions de levage, dans lequel la plate-forme (6) peut en outre, dans un état d'élévation au niveau d'un espace de chargement du véhicule automobile, pivoter d'une position de pivotement horizontale à une position de pivotement verticale dans laquelle elle ferme l'espace de chargement du véhicule automobile ou est positionnée derrière une porte fermant l'espace de chargement, et inversement peut pivoter de la position de pivotement verticale à la position de pivotement horizontale, ou dans lequel la plate-forme (6) peut être amenée dans une position d'arrimage sous l'espace de chargement du véhicule automobile et des régions de plate-forme pivotantes sont basculées les unes par rapport aux autres et repliées les unes contre les autres, et comprenant un entrainement pour le mécanisme de levage et de pivotement (8), dans lequel le levage, l'abaissement et le pivotement de la plate-forme (6) ou de parties de plate-forme sont commandés au moyen d'un dispositif de commande électrique ou électronique (26), dans lequel une télécommande (40) servant à commander à distance le dispositif de commande (26) est prévu pour une communication sans fil et en particulier numériquement codée, comprenant un clavier portatif (42) pouvant être emporté avec soi par l'utilisateur et comprenant une pièce d'émission/réception (44) associée au dispositif de commande (26), dans lequel le clavier portatif (42) et la pièce d'émission/réception (44) comportent des dispositifs d'émission-réception (46, 48) conçus pour communiquer sans fil les uns avec les autres, dans lequel un dispositif (50) servant à détecter la position de levage et/ou de pivotement de la plate-forme (6) et collaborant avec le dispositif de commande (26) est prévu, **caractérisé en ce que** le dispositif de commande (26) est conçu pour signaler la position de levage et/ou de pivotement de la plate-forme (6) au clavier portatif (42) au moyen d'une communication par l'intermédiaire de la télécommande (40) et **en ce que** la position de levage et/ou de pivotement de la plate-forme (6) peut être affichée de manière visuelle et/ou acoustique, ou être indiquée de manière vibratoire, au niveau du clavier portatif (42), et **en ce que** le clavier portatif (42) ne peut continuer à être utilisé qu'après réception du message de position de levage et/ou de pivotement de la plate-forme (6).

2. Hayon de chargement selon la revendication 1, **caractérisé en ce que** l'alimentation du dispositif de commande électrique ou électronique (26) avec une tension de commande, et de ce fait la disponibilité opérationnelle du hayon de chargement depuis la cabine de conduite (32) du véhicule automobile, peut être activée et de manière préférée peut également être désactivée au moyen d'une commande à distance grâce au clavier portatif (42).

3. Hayon de chargement selon la revendication 1 ou 2, **caractérisé en ce que** le dispositif de commande électrique ou électronique (26) est conçu pour informer en retour le clavier portatif (42) d'un état d'activation, à savoir de l'alimentation du dispositif de commande (26) avec une tension de commande et de ce fait de la disponibilité opérationnelle du hayon de chargement (2), au moyen d'une communication par l'intermédiaire de la télécommande (40), et **en ce que** l'état d'activation peut être affiché de manière visuelle et/ou acoustique, ou être indiqué de manière vibratoire, au niveau du clavier portatif (42).

4. Hayon de chargement selon la revendication 3, **caractérisé en ce que** le clavier portatif (42) ne peut continuer à être utilisé qu'après réception du message en retour d'un état d'activation du dispositif de commande électrique ou électronique (26).

5. Hayon de chargement selon l'une quelconque ou plusieurs des revendications précédentes, **caractérisé par** un dispositif de test (60) conçu pour déterminer si le clavier portatif (42) se trouve dans la cabine de conduite (32), et en conséquence le clavier portatif (42) et le dispositif de test (60) collaborent de telle manière que l'alimentation du dispositif de commande électrique ou électronique (26) avec une tension de commande, et de ce fait la disponibilité opérationnelle du hayon de chargement (2) depuis la cabine de conduite (32) du véhicule automobile, ne peut être activée au moyen de la commande à distance grâce au clavier portatif (40) que lorsque le clavier portatif (42) se trouve dans la cabine de conduite et est détecté de manière automatique par le dispositif de test (60).

6. Hayon de chargement selon l'une quelconque ou plusieurs des revendications précédentes, **caractérisé en ce qu'**une station d'accueil (62) destinée au clavier portatif (42) est prévue dans la cabine de conduite (32) du véhicule automobile, et **en ce que** la station d'accueil (62) et le clavier portatif (42) collaborent de telle manière qu'une activation de l'alimentation du dispositif de commande électrique ou électronique (26) avec une tension de commande à partir de la cabine de conduite (32) du véhicule automobile ne peut s'effectuer ensuite que par commande à distance grâce au clavier portatif (42) lorsque le clavier portatif (42) se trouve sur la station d'accueil (62).

7. Hayon de chargement selon l'une quelconque ou plusieurs des revendications précédentes, **caractérisé par** un dispositif de test (60) conçu pour déterminer si le clavier portatif (42) se trouve dans la cabine de conduite (32), et en conséquence le clavier portatif (42) et le dispositif de test (60) collaborent de telle manière que le clavier portatif (42) ne peut ensuite être utilisé au moyen de la commande à distance depuis la cabine de conduite (32) du véhicule automobile pour une commande active, c'est-à-dire pour le réglage du mécanisme de levage et de pivotement (8), que lorsque le clavier portatif (42) se trouve dans la cabine de conduite (32) et est détecté de manière automatique par le dispositif de test (60).

8. Hayon de chargement selon l'une quelconque ou plusieurs des revendications précédentes, **caractérisé en ce qu'**une station d'accueil (62) destinée au clavier portatif (42) est prévue dans la cabine de conduite (32) du véhicule automobile et **en ce que** la station d'accueil (42) et le clavier portatif collaborent de telle manière que le clavier portatif (42) ne peut ensuite être utilisé au moyen de la commande à distance depuis la cabine de conduite (32) du véhicule automobile pour une commande active, c'est-à-dire pour le réglage du mécanisme de levage et de pivotement (8), que lorsque le clavier portatif (42) se trouve sur la station d'accueil (62).

9. Hayon élévateur selon l'une quelconque ou plusieurs des revendications précédentes, **caractérisé en ce que** le clavier portatif (42) de la cabine de conduite (32) du véhicule automobile n'est utilisé au moyen de la commande à distance pour la commande active, c'est-à-dire pour le réglage du mécanisme de levage et de pivotement (8), que lorsqu'un message en retour en provenance d'une caméra de recul (70) parvient au clavier portatif (42) par une communication sans fil ou parvient au clavier portatif (42) par une communication filaire par l'intermédiaire d'une station d'accueil (62) destinée au clavier portatif (42) .

10. Hayon de chargement selon l'une quelconque ou plusieurs des revendications précédentes, **caractérisé en ce qu'**un dispositif (74) collaborant avec le clavier portatif (42) est prévu en vue d'une détection de proximité, de sorte qu'une activation de l'alimentation du dispositif de commande électrique ou électronique (26) avec une tension de commande, ou de certaines fonctions spécifiques du réglage du mécanisme de levage et de pivotement (8), en particulier le pivotement de la plate-forme (6) en position verticale, au moyen de la commande à distance grâce au clavier portatif (42) depuis l'extérieur de la cabine de conduite (32) ne peut être effectuée que lorsque le clavier portatif (42) se trouve dans les limites d'une force de signal ou d'une distance prédéterminée par rapport à un point de référence situé à proximité du mécanisme de levage et de pivotement (8).

11. Hayon de chargement selon l'une quelconque ou plusieurs des revendications précédentes, **caractérisé par** un dispositif de test (60) conçu pour déterminer si le clavier portatif (42) se trouve dans la cabine de conduite (32) et collaborant avec un dispositif d'interruption de démarrage (80) destiné au véhicule automobile de telle manière que le dispositif d'interruption de démarrage (80) ne peut être désactivé ou est désactivé de manière automatique que lorsque le clavier portatif (42) se trouve dans la cabine de conduite (32) et est détecté de manière automatique par le dispositif de test (60).

12. Hayon de chargement selon la revendication 11, **caractérisé en ce qu'**une station d'accueil (62) destinée au clavier portatif (42) est prévue dans la cabine du véhicule automobile et **en ce que** le dispositif de test (60) est intégré dans la station d'accueil (62), de sorte que le dispositif d'interruption de démarrage (80) ne peut être désactivé ou est désactivé de manière automatique que lorsque le clavier portatif (42) se trouve sur la station d'accueil (62).

13. Procédé de fonctionnement d'un hayon de chargement (2) selon l'une quelconque ou plusieurs des revendications précédentes, destiné à un véhicule automobile, dans lequel une position de levage et/ou de pivotement de la plate-forme (6) est détectée au moyen d'un dispositif (50) collaborant avec le dispositif de commande (26), **caractérisé en ce que** la position de levage et/ou de pivotement de la plate-forme (6) est transmise au clavier portatif (42) au moyen du dispositif de commande (26) et au moyen d'une communication par l'intermédiaire de la télécommande (40) et **en ce que** la position de levage et/ou de pivotement de la plate-forme (6) est d'abord affichée de manière visuelle et/ou acoustique, ou est indiquée de manière vibratoire, au niveau du clavier portatif (42) et une commande active, c'est-à-dire un réglage du mécanisme de levage et de pivotement (8), n'est effectuée qu'ensuite au moyen d'une commande à distance grâce au clavier portatif (42).
